# EUROPÄISCHE PATENTSCHRIFT

(11) **EP 4 614 021 B1**
(45) Veröffentlichungstag und Bekanntmachung des Hinweises auf die Patenterteilung: **26.08.2026**
(21) Anmeldenummer: 24216148.7
(22) Anmeldetag: 28.11.2024
(51) Int. Cl.: F16C 33/80

(54) **RADTRÄGERANORDNUNG FÜR EIN KRAFTFAHRZEUG SOWIE VERFAHREN ZUM HERSTELLEN EINER SOLCHEN RADTRÄGERANORDNUNG**
WHEEL CARRIER ARRANGEMENT FOR A MOTOR VEHICLE AND METHOD FOR PRODUCING SUCH A WHEEL CARRIER ARRANGEMENT
AGENCEMENT DE SUPPORT DE ROUE POUR UN VÉHICULE AUTOMOBILE AINSI QUE PROCÉDÉ DE FABRICATION D'UN TEL AGENCEMENT DE SUPPORT DE ROUE

(30) Priorität: 05.03.2024 DE 102024106309
(43) Veröffentlichungstag der Anmeldung: 10.09.2025
(73) Patentinhaber: AUDI AG, 85057 Ingolstadt (DE)
(72) Erfinder: Frisch, Michael, 94513 Schönberg (DE); Albl, Johannes, 85055 Ingolstadt (DE)

(56) Entgegenhaltungen:
- JP-A- 2008 221 864
- JP-A- 2008 223 783
- JP-A- 2009 197 941
- US-A- 3 510 138
- US-B2- 8 087 831

## Beschreibung

Die Erfindung betrifft eine Radträgeranordnung für ein Kraftfahrzeug, mit einem Radträger und einem Radlager zur Drehlagerung einer Radnabe an dem Radträger um eine Radnabendrehachse, wobei die Radnabe eine erste Verzahnung aufweist, die mit einer zweiten Verzahnung eines Drehmomentübertragungselements in Eingriff steht, wobei zwischen einem Innenring und einem Außenring des Radlagers eine mit einem Vordichtungselement dichtend zusammenwirkende Dichtung angeordnet ist und das Vordichtungselement formschlüssig mit dem Drehmomentübertragungselement zusammenwirkt, um dieses in axialer Richtung bezüglich der Radnabendrehachse relativ zu dem Radlager festzusetzen. Die Erfindung betrifft weiterhin ein Verfahren zum Herstellen einer Radträgeranordnung für ein Kraftfahrzeug.

Aus dem Stand der Technik ist beispielsweise die Druckschrift DE 10 2022 104 768 A1 bekannt. Diese beschreibt eine Radlagerdichtung für eine Stirnverzahnung, umfassend einen Dichtungsträger und ein vom Dichtungsträger getragenes Dichtungselement, wobei die Radlagerdichtungen einen Encoder zur sensorischen Erfassung einer Drehzahl aufweist sowie ein an dem Dichtungsträger ausgeformt des Snap-In-Element, welches die Radlagerdichtungen formschlüssig gegenüber der Stirnverzahnung einer Radlagereinheit axial festlegt.

Weiterhin beschreibt die Druckschrift DE 10 2006 032 159 A1 eine Lageranordnung einer über ein Drehgelenk antreibbaren Radnabe eines Kraftfahrzeugs, bei der die mit einem Radflansch verbundene Radnabe und das mit einer Antriebswelle verbundene Drehgelenk mittels einer Verzahnung drehfest miteinander verbunden sind, und mit einem auf der Radnabe aufgezogenen zweireihigen Wälzlager mit zumindest einem separaten, axial außen angeordneten und zum Drehgelenk gerichteten Lagerinnenring, der mit einer axial äußeren Stirnfläche im Bereich eines Endes eines Achsstumpfs der Radnabe angeordnet und durch eine auf die Stirnfläche des separaten Lagerinnenrings einwirkende Radialfläche der Radnabe axial vorgespannt ist, wobei Außenring und Lagerinnenring mit einer Dichtung versehen sind, welche wenigstens einen mit dem Lagerinnenring verbundenen und aus Blech bestehenden Dichtring mit im Querschnitt jeweils einem radialen Schenkel und einem axialen Schenkel aufweist, wobei der axiale Schenkel drehfest mit dem Lagerinnenring verbunden und nach axial innen gerichtet ist. Dabei ist es vorgesehen, dass der axiale Schenkel des Dichtrings des Lagerinnenrings nach radial innen und nach axial außen umgebogen ist, wobei ein freies Ende des axialen Schenkels axial nach außen die Stirnfläche des Lagerinnenrings überragt.

Weitere Radlageranordnungen sind aus den Druckschriften EP 2 541 108 B1, US 8 087 831 B2 und WO 2009/140996 A1 bekannt.

Es ist Aufgabe der Erfindung, eine Radträgeranordnung für ein Kraftfahrzeug vorzuschlagen, welche gegenüber bekannten Radträgeranordnungen Vorteile aufweist, insbesondere bei einfacher Montierbarkeit eine hohe Dichtigkeit aufweist und aus diesem Grund besonders beständig gegenüber Einflüssen aus einer Außenumgebung des Kraftfahrzeugs ist.

Dies wird erfindungsgemäß mit einer Radträgeranordnung für ein Kraftfahrzeug mit den Merkmalen des Anspruchs 1 erreicht. Dabei ist vorgesehen, dass das Vordichtungselement den Außenring des Radlagers zur Ausbildung eines Dichtungslabyrinths umgreift.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Die Radträgeranordnung dient der Anbindung eines Rads an eine Karosserie des Kraftfahrzeugs. Bevorzugt ist sie Bestandteil des Kraftfahrzeugs, kann jedoch selbstverständlich auch separat von diesem vorliegen, insbesondere bis zu ihrer Montage an dem Kraftfahrzeug. Besonders bevorzugt ist die Radträgeranordnung Bestandteil einer Radaufhängung, mittels welcher der Radträger und damit auch das Rad bezüglich der Karosserie aufgehängt ist, insbesondere federnd aufgehängt. Das Rad ist an dem Radträger der Radaufhängung drehbar gelagert. Hierzu ist das Rad an der Radnabe befestigt oder befestigbar, welche schlussendlich nach der Montage der Radaufhängung, insbesondere an dem Kraftfahrzeug, mittels des Radlagers an dem Radträger drehbar gelagert ist. Über die Radnabe ist also das Rad oder zumindest eine Felge des Rads an dem Radträger drehbar gelagert. Die Felge dient als Träger für einen Reifen des Rads, nämlich vorzugsweise für einen luftgefüllten Reifen.

Der Radträger weist beispielsweise eine Radlageraufnahme auf, welche als Öffnung, insbesondere als randgeschlossene Öffnung, in dem Radträger ausgestaltet ist. In der Radlageraufnahme ist das Radlager angeordnet. Zudem greift die Radnabe und/oder eine mit ihr drehfest gekoppelte Welle wenigstens bereichsweise in die Radlageraufnahme ein. Besonders bevorzugt durchgreifen die Radnabe und/oder die Welle, insbesondere gemeinsam, die Radlageraufnahme in axialer Richtung bezüglich der Radnabendrehachse zumindest teilweise, insbesondere vollständig.

Das Radlager ist vorzugsweise als Wälzlager ausgestaltet und verfügt insoweit über den Innenring und den Außenring, zwischen welchen zur Reibungsreduzierung Wälzkörper vorliegen. Der Innenring ist der Radnabe zugeordnet, insbesondere mit der Radnabe verbunden, beispielsweise ist er einstückig mit ihr ausgestaltet oder an ihr befestigt, wohingegen der Außenring dem Radträger zugeordnet, insbesondere mit dem Radträger verbunden ist, zum Beispiel an ihm befestigt ist. Dabei liegt der Außenring bevorzugt in der Radlageraufnahme vor. Anders ausgedrückt liegt der Außenring mit seiner Außenumfangsfläche an einer die Radlageraufnahme begrenzenden Innenumfangsfläche des Radträgers an.

Die Radaufhängung verfügt zusätzlich zu der Radträgeranordnung über eine Lenkeranordnung, welche der Kopplung des Radträgers mit der Karosserie des Kraftfahrzeugs dient. Die Lenkeranordnung ist also einerseits mit dem Radträger und andererseits mit der Karosserie verbunden. Vorzugsweise greift die Lenkeranordnung unmittelbar an dem Radträger an beziehungsweise ist an diesem unmittelbar gelagert, insbesondere drehbar gelagert. Die Anbindung der Lenkeranordnung an den Radträger erfolgt beispielsweise mittels eines Lenkerlagers, welches insoweit zwischen der Lenkeranordnung und dem Radträger angeordnet ist. Die Lenkeranordnung kann über einen Dreieckslenker und/oder einen Trapezlenker und/oder einen oder mehrere Stablenker verfügen. Jeder dieser Lenker greift einerseits an dem Radträger und andererseits an der Karosserie an, jeweils unmittelbar oder zumindest mittelbar. Jeder der Lenker kann entweder als Querlenker oder als Längslenker ausgestaltet sein.

Weiterhin weist die Radaufhängung zur Dämpfung und zur Federung des Radträgers bezüglich der Karosserie beispielsweise ein Federbein auf. Dieses ist ebenso wie die Lenkeranordnung einerseits mit dem Radträger und andererseits mit der Karosserie verbunden. Zur Dämpfung des Radträgers bezüglich der Karosserie verfügt das Federbein über wenigstens einen Dämpfer, zur Federung bezüglich der Karosserie über wenigstens eine Feder. Grundsätzlich können der Dämpfer und die Feder beliebig zueinander angeordnet, beispielsweise miteinander in Serie oder parallel geschaltet sein. Besonders bevorzugt liegt das Federbein als MacPherson-Federbein vor. In diesem Fall dient das Federbein nicht nur einer Federung beziehungsweise Dämpfung des Rads beziehungsweise des Radträgers, sondern zusätzlich auch einer Führung des Rads.

Der Radträger ist zumindest zeitweise mit einer Antriebseinrichtung des Kraftfahrzeugs antriebstechnisch gekoppelt. Die Antriebseinrichtung kann als Einzelradantrieb ausgestaltet sein. Bevorzugt verfügt sie über eine elektrische Traktionsmaschine, mittels welcher ein auf das Antreiben des Kraftfahrzeugs gerichtetes Antriebsdrehmoment erzeugbar ist oder zumindest zeitweise erzeugt wird. Die antriebstechnische Anbindung der Radnabe an die Antriebseinrichtung erfolgt über das Drehmomentübertragungselement. Die Radnabe ist mit dem Drehmomentübertragungselement drehfest gekoppelt. Hierzu weist die Radnabe die erste Verzahnung auf, die mit der zweiten Verzahnung des Drehmomentübertragungselements in Eingriff steht. Die Verzahnungen liegen beispielsweise als Axialverzahnungen oder bevorzugt als Stirnverzahnungen vor. Die Stirnverzahnungen sind wiederum vorzugsweise als Hirth-Verzahnungen ausgestaltet. Beispielsweise ist das Drehmomentübertragungselement Bestandteil eines winkelbeweglichen Gelenks, über welches der Radträger antriebstechnisch mit einer Welle beziehungsweise einer Antriebswelle gekoppelt ist.

Um das Radlager vor Einflüssen aus der Außenumgebung des Kraftfahrzeugs zu schützen, ist zwischen dem Innenring und dem Außenring des Radlagers die Dichtung angeordnet. Diese ist dazu ausgestaltet, einen Innenraum des Radlagers, insbesondere einen die Wälzkörper aufnehmenden Wälzkörperraum des Radlagers, gegenüber der Außenumgebung abzudichten, nämlich aus Richtung des Drehmomentübertragungselements. Um die Wirkung der Dichtung zu verbessern, weist die Radträgeranordnung das Vordichtungselement auf. Dieses ist drehfest mit dem Innenring verbunden, wohingegen die Dichtung drehfest mit dem Außenring verbunden ist. Die Dichtung liegt insoweit einerseits unmittelbar an dem Außenring an und wirkt zudem andererseits mit dem Vordichtungselement dichtend zusammen, beispielsweise liegt sie hierzu an ihm an oder ist benachbart zu ihm angeordnet.

Das dichtende Zusammenwirken bedeutet nicht, dass die Dichtung eine Dichtwirkung nur gemeinsam mit dem Vordichtungselement erzielt; vielmehr können die Dichtung und das Vordichtungselement jeweils separat eine Dichtwirkung erzielen, sodass durch das Zusammenwirken von Dichtung und Vordichtungselement eine besonders gute Gesamtdichtwirkung realisiert ist. Bevorzugt weist die Dichtung mehrere Dichtlippen auf, von welchen sich vorzugsweise eine in radialer Richtung nach innen und eine andere in axialer Richtung in Richtung des Drehmomentübertragungselements und/oder in Richtung des Vordichtungselements erstreckt, beispielsweise an dem Vordichtungselement dichtend anliegt.

Eine solche Radträgeranordnung ist aufgrund der miteinander in Eingriff stehenden Verzahnungen aufwendig zu montieren, insbesondere im Falle der Stirnverzahnungen, da sichergestellt sein muss, dass die Zähne einer der Verzahnungen in die Zahnzwischenräume der jeweils anderen der Verzahnungen eingreifen und umgekehrt, dass also die Zähne der Verzahnungen nicht stirnseitig aufeinander stehen. Aus diesem Grund soll das Vordichtungselement als Montagehilfe ausgestaltet sein, nämlich indem es formschlüssig mit dem Drehmomentübertragungselement zusammenwirkt, um dieses in axialer Richtung relativ zu dem Radlager und/oder der Radnabe festzusetzen. Das Festsetzen erfolgt in einer axialen Stellung von Drehmomentübertragungselement und Radnabe beziehungsweise Radlager zueinander, in welcher die Zähne der ersten Verzahnung in die Zahnzwischenräume der zweiten Verzahnung und umgekehrt eingreifen, in welcher also die Verzahnungen vollständig miteinander in Eingriff stehen.

Bei der Montage der Radträgeranordnung werden das Drehmomentübertragungselement und die Radnabe aufeinander zu verlagert, bis die Verzahnungen miteinander in Eingriff stehen. In derjenigen Stellung, in welcher dieses der Fall ist, gerät das Vordichtungselement in den formschlüssigen Eingriff mit dem Drehmomentübertragungselement, um das Drehmomentübertragungselement und das Radlager und/oder die Radnabe aneinander festzusetzen, sodass die Verzahnungen nicht mehr außer Eingriff geraten können.

Anschließend wird das Drehmomentübertragungselement endgültig mit der Radnabe verbunden, beispielsweise durch das Einschrauben einer die Radnabe durchgreifenden Spannschraube in das Drehmomentübertragungselement. Ein Kopf der Spannschraube liegt hierbei auf der dem Drehmomentübertragungselement abgewandten Seite der Radnabe an dieser an, sodass mittels der Spannschraube die Radnabe und das Drehmomentübertragungselement in axialer Richtung aufeinander zu gedrängt und miteinander verspannt werden. Das formschlüssige Zusammenwirken des Vordichtungselements mit dem Drehmomentübertragungselement hat zudem den Vorteil, dass die Verzahnungen ebenfalls gegenüber der Außenumgebung abgedichtet sind, sodass keine weiteren Dichtungsmaßnahmen zu diesem Zweck notwendig sind.

Auch bei einer solchen Ausgestaltung der Radträgeranordnung kann jedoch noch Feuchtigkeit aus der Außenumgebung in sie eindringen, insbesondere bis zu der Dichtung und über diese in das Radlager. Aus diesem Grund soll die Abdichtung weiter verbessert werden. Hierzu ist es vorgesehen, das Vordichtungselement derart anzuordnen, dass es den Außenring des Radlagers zur Ausbildung eines Dichtungslabyrinths umgreift. Hierunter ist letztlich zu verstehen, dass das Vordichtungselement in radialer Richtung gesehen sowohl innenseitig als auch außenseitig des Außenrings vorliegt. Insbesondere greift das Vordichtungselement einerseits zwischen den Innenring und den Außenring des Radlagers ein, liegt also in axialer Richtung mit ihnen in Überdeckung vor.

Zusätzlich umgreift das Vordichtungselement andererseits den Außenring, liegt also auch auf der dem Innenring in radialer Richtung abgewandten Seite des Außenrings vor, insbesondere greift es dort zwischen den Außenring und den Radträger ein. Das Umgreifen des Außenrings durch das Vordichtungselement erfolgt derart, dass das Dichtungslabyrinth geschaffen ist, sodass zumindest das Vordichtungselement und der Außenring zusammen eine Labyrinthdichtung bilden. Bevorzugt trägt auch der Radträger zur Ausbildung der Labyrinthdichtung bei, insbesondere indem das Vordichtungselement zwischen den Außenring und den Radträger eingreift. Hierdurch ist eine besonders zuverlässige Abdichtung der Radträgeranordnung gegenüber der Außenumgebung gewährleistet.

Eine Weiterbildung der Erfindung sieht vor, dass das Drehmomentübertragungselement ein Gelenkelement eines winkelbeweglichen Gelenks ist, über welches der Radträger antriebstechnisch mit einer Welle gekoppelt ist. Das winkelbewegliche Gelenk ist hierzu einerseits an die Welle und andererseits an die Radnabe antriebstechnisch angebunden. Das winkelbewegliche Gelenk liegt vorzugsweise als Gleichlaufgelenk vor. Auch andere Ausgestaltungen, beispielsweise als Kreuzgelenk oder dergleichen, sind jedoch grundsätzlich vorstellbar. Das winkelbewegliche Gelenk verfügt über mehrere Gelenkelemente, nämlich zumindest über ein erstes Gelenkelement und ein zweites Gelenkelement, wobei diese winkelbeweglich miteinander verbunden sind.

Das bedeutet, dass die beiden Gelenkelemente, also das erste Gelenkelement und das zweite Gelenkelement, drehmomentübertragend miteinander verbunden sind, ihre Lage zueinander jedoch veränderbar ist. So ist das erste Gelenkelement um eine erste Drehachse und das zweite Gelenkelement um eine zweite Drehachse drehbar gelagert. Die Drehachsen schneiden üblicherweise einander, können jedoch während eines bestimmungsgemäßen Betriebs der Radträgeranordnung einen beliebigen Winkel aus einem Gelenkwellenwinkelbereich aufweisen. Dieser Winkel kann während des Betriebs der Radträgeranordnung variieren, im Rahmen der Radaufhängung wird hierdurch beispielsweise ein Einfedern des Radträgers ausgeglichen.

Das erste Gelenkelement ist drehfest mit der Welle gekoppelt, das zweite Gelenkelement ist bevorzugt mit der Radnabe gekoppelt oder zumindest koppelbar. Hierzu weist das zweite Gelenkelement die zweite Verzahnung auf, die mit der ersten Verzahnung der Radnabe in drehmomentübertragender Verbindung steht oder in eine solche gebracht wird. Die Verwendung des winkelbeweglichen Gelenks ermöglicht eine zuverlässige antriebstechnische Anbindung der Radnabe an die Antriebseinrichtung.

Eine Weiterbildung der Erfindung sieht vor, dass das Vordichtungselement ein erstes Dichtungsteil und ein zweites Dichtungsteil aufweist, wobei das erste Dichtungsteil an dem Innenring des Radlagers anliegt und sich bis auf die dem Innenring abgewandte Seite des Außenrings erstreckt und das zweite Dichtungsteil von dem ersten Dichtungsteil ausgeht und mit dem Drehmomentübertragungselement formschlüssig zusammenwirkt. Das erste Dichtungsteil geht also von dem Innenring des Radlagers aus und erstreckt sich in radialer Richtung nach außen, nämlich bis auf die dem Innenring abgewandte Seite des Außenrings. Dort bildet es zusammen mit dem Außenring das Dichtungslabyrinth und entsprechend die Labyrinthdichtung.

Beispielsweise ist das erste Dichtungsteil hierzu im wesentlichen C-förmig ausgestaltet, weist also einen ersten Schenkel auf, welcher an dem Innenring anliegt, einen zweiten Schenkel, welcher von dem ersten Schenkel ausgeht und sich in radialer Richtung nach außen erstreckt sowie einen dritten Schenkel, der von dem zweiten Schenkel ausgeht und auf der dem Innenring abgewandten Seite des Außenrings angeordnet ist. Der erste Schenkel und der dritte Schenkel sind jeweils gegenüber dem zweiten Schenkel angewinkelt, schließen mit ihm also jeweils einen Winkel ein, der größer als 0° und kleiner als 180° ist. Bevorzugt beträgt der Winkel jeweils mindestens 60° und höchstens 120°, mindestens 75° und höchstens 105° oder in etwa oder genau 90°.

Bevorzugt beträgt eine Länge des dritten Schenkels in axialer Richtung und ausgehend von dem zweiten Schenkel mindestens 50 %, mindestens 75 % oder mindestens 100 % einer Länge des ersten Schenkels in axialer Richtung, ebenfalls ausgehend von dem zweiten Schenkel. Der erste Schenkel und der dritte Schenkel umgreifen den Außenring gemeinsam, der erste Schenkel liegt hierbei auf der dem Innenring zugewandten Seite und der dritte Schenkel auf der dem Innenring abgewandten Seite des Außenrings vor. Der erste Schenkel und der dritte Schenkel sind von dem zweiten Schenkel voneinander beabstandet, insbesondere lediglich über diesen miteinander verbunden.

Das zweite Dichtungsteil geht von dem ersten Dichtungsteil aus, ist also unmittelbar an dieses angebunden. Es erstreckt sich ausgehend von dem ersten Dichtungsteil in axialer Richtung, insbesondere bis hin zu dem Drehmomentübertragungselement und greift formschlüssig an diesem an. Insoweit ist das zweite Dichtungsteil nach Art eines Auslegers ausgestaltet. Beispielsweise weist das zweite Dichtungsteil in axialer Richtung Abmessungen auf, welche Abmessungen des erste Dichtungsteils in derselben Richtung mindestens entsprechen, vorzugsweise jedoch größer sind, beispielsweise um einen Faktor von mindestens 1,5, mindestens 2,0 oder mindestens 2,5. Die beschriebene Ausgestaltung der Radträgeranordnung ermöglicht sowohl die einfache Montage als auch das zuverlässige Abdichtung gegenüber der Außenumgebung.

Eine Weiterbildung der Erfindung sieht vor, dass das erste Dichtungsteil aus einem ersten Material und das zweite Dichtungsteil aus einem zweiten Material besteht, wobei das erste Material und das zweite Material identisch oder voneinander verschieden sind. In der ersten Variante bestehen die beiden Dichtungsteile aus unterschiedlichen Materialien, wobei beispielsweise für das erste Material Metall und für das zweite Material Kunststoff verwendet wird. Insbesondere ist in diesem Fall das zweite Dichtungsteil an das erste Dichtungsteil angespritzt. Es kann jedoch auch vorgesehen sein, dass die beiden Dichtungsteile aus dem gleichen Material bestehen. Auch in diesem Fall können Sie aneinander angespritzt sein, besonders bevorzugt sind jedoch einstückig und materialeinheitlich ausgestaltet. In jedem Fall werden die bereits genannten Vorteile mit einer solchen Ausgestaltung der Radträgeranordnung erzielt.

Eine Weiterbildung der Erfindung sieht vor, dass das erste Dichtungsteil mit dem zweiten Dichtungsteil stoffschlüssig verbunden ist, oder dass das erste Dichtungsteil und das zweite Dichtungsteil einstückig und materialeinheitlich ausgestaltet sind. Auf eine solche Ausgestaltung wurde bereits hingewiesen. Die stoffschlüssige Verbindung zwischen den beiden Dichtungsteilen ist insbesondere vorgesehen, falls für die Dichtungsteile unterschiedliche Materialien zum Einsatz kommen. Anderenfalls sind sie vorzugsweise einstückig und materialeinheitlich hergestellt, insbesondere liegen sie gemeinsam als Stanzbiegeteil vor. Dies ermöglicht eine einfache und kostengünstige Herstellung der Radträgeranordnung.

Eine Weiterbildung der Erfindung sieht vor, dass das zweite Dichtungsteil elastisch ist, sodass ein dem Drehmomentübertragungselement zugewandtes Ende des zweiten Dichtungsteils relativ zu dem ersten Dichtungsteil elastisch auslenkbar ist. Das zweite Dichtungsteil ist derart ausgestaltet, dass es während der Montage der Radträgeranordnung, insbesondere bei dem Aufeinanderzuverlagern von Drehmomentübertragungselement und Radnabe beziehungsweise Radlager ausgehend von einer Ausgangsform elastisch verformt wird. Aufgrund dieses Verformens entsteht eine Rückstellkraft, welche das zweite Dichtungsteil zurück in seine Ausgangsform drängt.

Aufgrund der Rückstellkraft gerät das Vordichtungselement bei dem Erreichen einer Montagestellung von Drehmomentübertragungselement und Radnabe, in welcher die Verzahnungen vollständig miteinander in Eingriff stehen, mit dem Drehmomentübertragungselement in formschlüssigen Eingriff, sodass das Drehmomentübertragungselement bezüglich der Radnabe in axialer Richtung festgesetzt ist. Insbesondere wird das zweite Dichtungsteil während der Montage ausgehend von der Ausgangsstellung in radialer Richtung nach außen gedrängt, sodass sein dem Radlager abgewandtes Ende von der Rückstellkraft in Richtung des Drehmomentübertragungselements gedrängt wird. Hierdurch ist eine einfache und zuverlässige Montage der Radträgeranordnung sichergestellt.

Eine Weiterbildung der Erfindung sieht vor, dass zwischen dem Außenring und dem Radträger ein Labyrinthspalt zur Aufnahme des Vordichtungselements vorliegt, der insbesondere zumindest teilweise, vorzugsweise vollständig, in dem Außenring und/oder zumindest teilweise, vorzugsweise vollständig, in dem Radträger hergestellt ist. Der Labyrinthspalt ist in radialer Richtung innenseitig von dem Außenring und in radialer Richtung außenseitig von dem Radträger begrenzt. Der Labyrinthspalt ist zur Aufnahme des Vordichtungselements vorgesehen und ausgestaltet und das Vordichtungselement liegt nach der Montage der Radträgeranordnung in ihm vor.

Der Labyrinthspalt kann in dem Außenring und/oder dem Radträger ausgestaltet sein. Beispielsweise liegt in dem Außenring auf seiner dem Radträger zugewandten Seite eine Aussparung vor, die den Labyrinthspalt bildet. Eine solche Ausgestaltung ermöglicht zum einen eine zuverlässige Herstellung der Labyrinthdichtung durch das Eingreifen des Vordichtungselements in den Labyrinthspalt und zum anderen wird die Anordnung eines Encoders beziehungsweise Impulsgebers ermöglicht. Der Impulsgeber weist beispielsweise ein auf das Vordichtungselement aufgebrachtes Element auf, insbesondere ein Gummielement. Vorzugsweise ist der Impulsgeber auf das Vordichtungselement aufvulkanisiert. Die beschriebene Ausgestaltung bewirkt eine gute Abdichtung.

Eine Weiterbildung der Erfindung sieht vor, dass das Vordichtungselement einen Dichtungsvorsprung aufweist, der über eine Strecke in den Labyrinthspalt eingreift, die mindestens einer in radialer Richtung vorliegenden Spaltbreite entspricht. Die Spaltbreite entspricht einem Abstand zwischen dem Außenring und dem Radträger in dem Labyrinthspalt. Der Dichtungsvorsprung des Vordichtungselements, welcher insbesondere dem vorstehend erwähnten dritten Schenkel des Vordichtungselements entspricht, greift in axialer Richtung über die bestimmte Strecke in den Labyrinthspalt ein. Diese Strecke entspricht mindestens der Spaltbreite, bevorzugt ist sie jedoch größer, beispielsweise um einen Faktor von mindestens 1,5, mindestens 2,0 oder mindestens 2,5. Hierdurch ist ist eine gute Dichtwirkung der Labyrinthdichtung erzielt.

Eine Weiterbildung der Erfindung sieht vor, dass der Dichtungsvorsprung in dem Labyrinthspalt einen ersten Abstand von dem Außenring und einen zweiten Abstand von dem Radträger aufweist, wobei der erste Abstand und der zweite Abstand jeweils mindestens 0,1 mm bis höchstens 5 mm betragen. Unter den Abständen sind radiale Abstände zu verstehen. Der Dichtungsvorsprung greift also zwischen den Außenring und den Radträger ein, berührt diese jedoch nicht. Bevorzugt ist der Abstand so gering wie möglich, es können jedoch auch größere Abstände zugelassen sein, insbesondere soll der Dichtungsvorsprung in diesem Fall jedoch um die vorstehend definierte Strecke in den Labyrinthspalt eingreifen, um eine hinreichende Dichtwirkung zu erzielen.

Eine Weiterbildung der Erfindung sieht vor, dass der Radträger eine Ausnehmung aufweist, in welcher das Radlager, die Radnabe sowie das Drehmomentübertragungselement jeweils zumindest bereichsweise angeordnet sind und in radialer Richtung bezüglich der Radnabendrehachse vorliegende Innenabmessungen der Ausnehmung aus Richtung des Radlagers in Richtung des Drehmomentübertragungselements abnehmen. Die Ausnehmung bildet die bereits erwähnte Radlageraufnahme, in welcher das Radlager angeordnet ist, vorzugsweise mit aus. Im Längsschnitt bezüglich der Radnabendrehachse gesehen nimmt die Ausnehmung das Radlager, die Radachse und das Drehmomentübertragungselement jeweils zumindest bereichsweise auf.

Der Außenring des Radlagers liegt mit seiner Außenumfangsfläche an einer die Ausnehmung begrenzenden Innenumfangsfläche des Radträgers an. Vorzugsweise weist hierbei die Ausnehmung in einem Bereich in axialer Richtung, in welchem das Radlager in Überdeckung mit dem Radträger vorliegt, konstante Abmessungen in radialer Richtung auf. Abseits des Radlagers nehmen die Abmessungen der Ausnehmung jedoch ab. Vorzugsweise liegen minimale Abmessungen der Ausnehmung in radialer Richtung im Längsschnitt gesehen abseits des Vordichtungselements vor oder allenfalls in Überdeckung mit dem Ende des zweiten Dichtungsteils. Besonders bevorzugt ist es hierbei vorgesehen, dass die minimalen Innenabmessungen der Ausnehmung kleiner sind als Abmessungen des Vordichtungselements, insbesondere des ersten Dichtungsteils, in radialer Richtung. Hierdurch wird eine Führung des Drehmomentübertragungselements während der Montage der Radträgeranordnung erreicht und eine Beschädigung des Vordichtungselements wird zuverlässig vermieden.

Eine Weiterbildung der Erfindung sieht vor, dass zum formschlüssigen Zusammenwirken des Vordichtungselements mit dem Drehmomentübertragungselement das Drehmomentübertragungselement einen Dichtspalt aufweist, in welchen das Vordichtungselement dichtend eingreift. Der Dichtspalt ist vorzugsweise in Umfangsrichtung durchgehend in dem Drehmomentübertragungselement ausgestaltet, liegt also als Nut beziehungsweise Umlaufnut vor. In den Dichtspalt greift das Vordichtungselement ein. Beispielsweise liegt es dichtend an einem den Dichtspalt begrenzenden Boden und/oder an einer den Dichtspalt begrenzenden Wand an oder es greift berührungsfrei in den Dichtspalt zum Realisieren einer weiteren Labyrinthdichtung ein.

Das formschlüssige Zusammenwirken des Vordichtungselements mit dem Drehmomentübertragungselement durch das Eingreifen in den Dichtspalt bewirkt also zum einen das Festsetzen des Drehmomentübertragungselements bezüglich des Radlagers und/oder der Radnabe in axialer Richtung und zum anderen eine Abdichtung der Verzahnungen gegenüber der Außenumgebung. Vorzugsweise greift das Vordichtungselement in Umfangsrichtung durchgehend in die Nut ein, um eine gute Dichtwirkung zu erzielen.

Eine Weiterbildung der Erfindung sieht vor, dass in einem Bereich in axialer Richtung, innerhalb welchem das Vordichtungselement das Drehmomentübertragungselement übergreift, zwischen dem Vordichtungselement und dem Drehmomentübertragungselement ein Radialspalt vorliegt, der in radialer Richtung Abmessungen aufweist, die zumindest Abmessungen eines Spalts zwischen dem Vordichtungselement und dem Radträger entsprechen, vorzugsweise größer sind. Der Bereich liegt abseits des Dichtspalt vor, insbesondere erstreckt er sich in axialer Richtung gesehen von einer unmittelbar benachbart zu dem Dichtspalt liegenden Stelle des Drehmomentübertragungselements in Richtung der Radnabe.

Der Radialspalt liegt zwischen dem Vordichtungselement und dem Drehmomentübertragungselement insbesondere in Form eines Ringspalts vor, er ist also in Umfangsrichtung umlaufend und durchgehend ausgestaltet. Unter den Abmessungen des Radialspalts in radialer Richtung sind minimale Abmessungen zu verstehen, also die minimalen Abmessungen des Radialspalts in radialer Richtung über den gesamten Bereich in axialer Richtung hinweg. Die Abmessungen des Radialspalt sollen mindestens so groß sein wie die Abmessungen des Spalts zwischen dem Vordichtungselement und dem Radträger an derselben Stelle in axialer Richtung gesehen. Die Abmessungen des Radialspalts und die Abmessungen des Spalts liegen also an derselben Axialposition vor. Mithilfe einer solchen Ausgestaltung wird während der Montage der Radträgeranordnung ein unerwünschter Kontakt zwischen dem Drehmomentübertragungselement und dem Vordichtungselement verhindert.

Eine Weiterbildung der Erfindung sieht vor, dass das Drehmomentübertragungselement einen Axialvorsprung aufweist, der in eine zentrale Bohrung der Radnabe eingreift, wobei der Axialvorsprung und die Bohrung derart ausgestaltet sind, dass sie in radialer Richtung formschlüssig miteinander zum Positionieren des Drehmomentübertragungselements bezüglich der Radnabe zusammenwirken, bevor das Vordichtungselement in Anlagekontakt mit dem Drehmomentübertragungselement gerät. Der Axialvorsprung wird während der Montage der Radträgeranordnung in die zentrale Bohrung der Radnabe eingesetzt, nämlich bis die Verzahnungen miteinander in Eingriff stehen. **In** dem Axialvorsprung ist beispielsweise ein Innengewinde zur Aufnahme der vorstehend bereits erwähnte Schraube hergestellt.

Der Axialvorsprung weist einen Außenumfang auf, welcher während der Montage mit einer die Bohrung begrenzenden Innenumfang der Radnabe in Anlagekontakt gerät und so das Drehmomentübertragungselement in radialer Richtung bezüglich der Radnabe ausrichtet. Der Axialvorsprung ist derart bemessen, dass er dieses ausrichten in radialer Richtung bereits bewirkt, bevor das Vordichtungselement in Kontakt mit dem Drehmomentübertragungselement tritt. Hierdurch wird sichergestellt, dass das Vordichtungselement gleichmäßig in radialer Richtung elastisch ausgelenkt wird und nicht etwa in axialer Richtung von dem Drehmomentübertragungselement komprimiert und damit unter Umständen beschädigt wird. Die beschriebene Ausgestaltung der Radträgeranordnung führt zu einer deutlichen Erleichterung der Montage.

Eine Weiterbildung der Erfindung sieht vor, dass die Ausnehmung, insbesondere die Radlageraufnahme, auf einer in axialer Richtung dem Radlager zugewandten Seite und/oder dem Drehmomentübertragungselement abgewandten Seite mit einer Einführschräge ausgestaltet ist. Die Ausnehmung weitet sich also auf, ihre Abmessungen in radialer Richtung nehmen insoweit zu, nämlich umso stärker, je größer der Abstand von dem Drehmomentübertragungselement ist. Hierdurch wird das Einbringen des Radlagers in den Radträger vereinfacht.

Eine Weiterbildung der Erfindung sieht vor, dass das Vordichtungselement zusammen mit dem Radträger einen Vordichtungsraum begrenzt, in welchen eine Wasserablaufbohrung einmündet. Der Vordichtungsraum wird von der Ausnehmung des Radträgers mit ausgebildet. Er ist in axialer Richtung einerseits von dem Vordichtungselement und in axialer Richtung andererseits von einer Wand des Radträgers begrenzt. Die Wand des Radträgers verläuft angewinkelt bezüglich der Radnabendrehachse, insbesondere steht sie senkrecht auf dieser.

Vorzugsweise steht die Wand in Überdeckung mit dem Vordichtungselement, beispielsweise liegen im Längsschnitt gesehen mindestens 10 %, mindestens 20 % oder mindestens 25 % des Vordichtungselements auf der dem Radlager abgewandten Seite der Wand. Hierdurch wird eine gute Abdichtung mittels des Vordichtungselement erzielt, welches insoweit abseits des Vordichtungsraum zwischen den Radträger und das Drehmomentübertragungselement eingreift. In radialer Richtung nach außen wird der Vordichtungsraum von dem Radträger und in radialer Richtung nach innen von dem Vordichtungselement begrenzt. In den Vordichtungsraum mündet die Wasserablaufbohrung ein, nämlich auf einer geodätischen am tiefsten liegenden Stelle des Vordichtungsraums. Hierdurch kann in der Vordichtungsraum vorliegendes Wasser zuverlässig in Richtung der Außenumgebung abfließen.

Eine Weiterbildung der Erfindung sieht vor, dass der Vordichtungsraum in radialer Richtung über das Vordichtungselement übersteht. In radialer Richtung gesehen begrenzt das Vordichtungselement den Vordichtungsraum also lediglich teilweise, da der Vordichtungsraum sich in radialer Richtung weiter nach außen erstreckt als das Vordichtungselement. Hierdurch wird eine zuverlässige Abführung des Wassers gewährleistet, da von dem Vordichtungselement abgeschleudertes Wasser in dem Vordichtungsraum zu der Wasserablaufbohrung geführt wird.

Eine Weiterbildung der Erfindung sieht vor, dass eine den Vordichtungsraum auf seiner radial außen liegenden Seite begrenzende Wand des Radträgers eine Kante aufweist. In der Kante stoßen zwei Bereiche der Wand unter einem Winkel aufeinander; es liegt also keine Rundung oder dergleichen vor. Die Kante gewährleiste wiederum ein zuverlässiges Abführen von abgeschleudertem Wasser. Durch die Kante wird nämlich eine Auffangrinne gebildet beziehungsweise definiert, in die das in radialer Richtung nach außen abgeschleuderte Wasser durch die auf es wirkende Fliehkraft hineingedrängt wird. Die beiden in der Kante aufeinandertreffenden Wandbereiche begrenzen die Auffangrinne so, dass die Auffangrinne den in radialer Richtung am weitesten außen liegenden Teil des Vordichtungsraums umfasst. Die Kante dient dazu, das Wasser zuverlässig in der Auffangrinne zu halten und in Richtung der Ablaufbohrung abzuführen. Hierzu liegen die Kante und die von ihr definierte Ablaufrinne in axialer Richtung gesehen in Überdeckung mit dem Vordichtungselement vor, insbesondere mit dem zweiten Dichtungsteil des Vordichtungselements.

Eine Weiterbildung der Erfindung sieht vor, dass das Vordichtungselement gegenüber einer senkrecht auf der Radnabendrehachse stehenden gedachten Ebene angewinkelt ist. Das Vordichtungselement weist eine Mittelebene auf, welche in axialer Richtung gesehen das Vordichtungselement mittig schneidet. Diese Mittelebene ist gegenüber der senkrecht auf der Radnabendrehachse stehenden Ebene angewinkelt, schließt mit ihr also einen Winkel ein, der größer als 0° und kleiner als 180° ist. Beispielsweise beträgt der Winkel mindestens 5° und höchstens 15°. Durch ein solches Anstellen des Vordichtungselements wird eine Erhöhung der Abschleuderwirkung auf Wasser erzielt.

Die Erfindung betrifft weiterhin ein Verfahren zum Herstellen einer Radträgeranordnung für ein Kraftfahrzeug, insbesondere einer Radträgeranordnung nach einem oder mehreren der vorhergehenden Ansprüche, wobei die Radträgeranordnung über einen Radträger und ein Radlager zur Drehlagerung einer Radnabe an dem Radträger um eine Radnabendrehachse verfügt, wobei die Radnabe eine erste Verzahnung aufweist, die mit einer zweiten Verzahnung eines Drehmomentübertragungselements in Eingriff gebracht wird, wobei zwischen einem Innenring und einem Außenring des Radlagers eine mit einem Vordichtungselement dichtend zusammenwirkende Dichtung angeordnet ist und das Vordichtungselement formschlüssig mit dem Drehmomentübertragungselement in Eingriff gebracht wird, um dieses in axialer Richtung bezüglich der Radnabendrehachse relativ zu dem Radlager festzusetzen. Dabei ist vorgesehen, dass das Vordichtungselement den Außenring des Radlagers zur Ausbildung eines Dichtungslabyrinths umgreifend angeordnet wird.

Auf die Vorteile einer derartigen Vorgehensweise beziehungsweise einer derartigen Ausgestaltung der Radträgeranordnung wurde bereits hingewiesen. Sowohl die Radträgeranordnung als auch das Verfahren zu ihrem Herstellen können gemäß den Ausführungen im Rahmen dieser Beschreibung weitergebildet sein, sodass insoweit auf diese verwiesen wird.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer Radträgeranordnung in einer ersten Ausführungsform,
- Figur 2: eine schematische Darstellung der Radträgeranordnung in einer zweiten Ausführungsform,
- Figur 3: eine schematische Darstellung der Radträgeranordnung in einer ersten Ansicht,
- Figur 4: eine schematische Darstellung der Radträgeranordnung in einer zweiten Ansicht, sowie
- Figur 5: eine schematische Darstellung der Radträgeranordnung in einer dritten Ansicht.

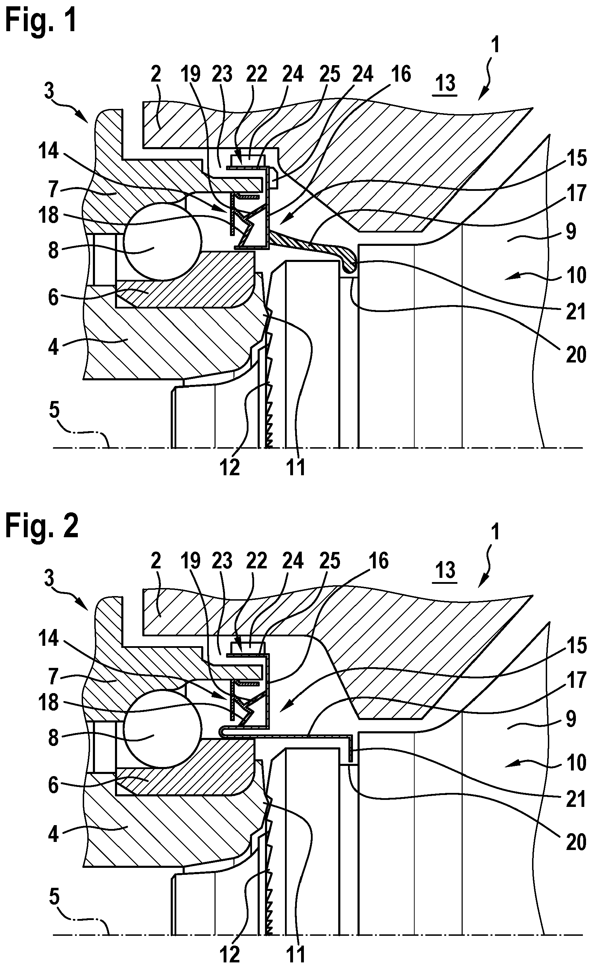

Die Figur 1 zeigt eine schematische Längsschnittdarstellung einer Radträgeranordnung 1 in einer ersten Ausführungsform, wie sie insbesondere für ein Kraftfahrzeug Verwendung findet. Die Radträgeranordnung 1 verfügt über einen Radträger 2, der vorzugsweise über wenigstens einen Lenker an eine Karosserie des Kraftfahrzeugs (nicht dargestellt) angebunden ist. Mittels eines Radlagers 3 ist eine Radnabe 4 bezüglich des Radträgers 2 drehbar gelagert, nämlich um eine Radnabendrehachse 5.

Das Radlager 3 verfügt über einen Innenring 6 und einen Außenring 7, zwischen welchen Wälzkörper 8 angeordnet sind. Es kann vorgesehen sein, dass der Innenring 6 einstückig und materialeinheitlich mit der Radnabe 4 ausgestaltet ist. In dem vorliegenden Ausführungsbeispiel ist er separat ausgestaltet. In axialer Richtung neben der Radnabe 4 ist ein Drehmomentübertragungselement 9 angeordnet. Vorzugsweise liegt dieses als Gelenkelement eines winkelbeweglichen Gelenks 10 vor. Die Radnabe 4 verfügt über eine erste Verzahnung 11, die hier beispielhaft als Stirnverzahnung vorliegt und drehmomentübertragend mit einer zweiten Verzahnung 12 des Drehmomentübertragungselements 9 in Eingriff steht, die ebenfalls als Stirnverzahnung ausgestaltet ist.

Zum Schutz des Radlagers 3, insbesondere seiner Wälzkörper 8, vor Einflüssen aus einer Außenumgebung 13 verfügt die Radträgeranordnung 1 über eine Dichtung 14, die zwischen dem Innenring 6 und dem Außenring 8 angeordnet ist, nämlich auf einer dem Drehmomentübertragungselement 9 zugewandten Seite der Wälzkörper 8. Zusätzlich ist ein Vordichtungselement 15 vorgesehen, das an dem Innenring 6 angeordnet ist und sich ausgehend von diesem in radialer Richtung nach außen erstreckt. Das Vordichtungselement 15 verfügt insbesondere über ein erstes Dichtungsteil 16 und ein zweites Dichtungsteil 17. Das erste Dichtungsteil 16 liegt an dem Innenring 6 an und erstreckt sich in radialer Richtung nach außen; das zweite Dichtungsteil 17 geht von dem ersten Dichtungsteil 16 aus und erstreckt sich in axialer Richtung von dem Radlager 3 fort. In der gezeigten ersten Ausführungsform sind die beiden Dichtungsteile 16 und 17 materialuneinheitlich ausgestaltet. Beispielsweise besteht das erste Dichtungsteil 16 aus Metall und das zweite Dichtungsteil 17 aus Kunststoff, welcher an das Metall angespritzt ist.

Die Dichtung 14 ist an dem Außenring 7 befestigt und liegt an dem Vordichtungselement 15 an, genauer gesagt an dem ersten Dichtungsteil 16. Vorzugsweise verfügt die Dichtung 14 über mehrere Dichtlippen 18 und 19, wobei die Dichtlippe 18 in radialer Richtung nach innen und die Dichtlippe 19 in axialer Richtung an dem Vordichtungselement 15 dichtend anliegt. Das Vordichtungselement 15 übergreift in axialer Richtung die Verzahnung 11 und 12 und greift in einen Dichtspalt 20 formschlüssig ein, nämlich auf seiner dem Radlager 3 abgewandten Ende 21. Der Dichtspalt 20 ist auf der dem Radlager 3 abgewandten Seite der Verzahnung 11 und 12 in dem Drehmomentübertragungselement 9 angeordnet. Das Eingreifen des Vordichtungselements 15 in den Dichtspalt 20 erfolgt insbesondere derart, dass eine Dichtwirkung erzielt ist. Durch das Eingreifen wird insoweit zum einen das Drehmomentübertragungselement 9 in axialer Richtung bezüglich der Radnabe 4 gehalten und zum anderen werden die Verzahnung 11 und 12 vor Einflüssen aus der Außenumgebung 13 geschützt.

Um eine besonders zuverlässige Abdichtung der Radträgeranordnung 1 zu erzielen, ist das Vordichtungselement 15 derart ausgestaltet, dass es den Außenring 7 des Radlagers 3 umgreift, nämlich derart, dass ein Dichtungslabyrinth 22 geschaffen ist. Hierzu greift das Vordichtungselement 15 in einen Labyrinthspalt 23 ein, der zwischen dem Außenring 7 und dem Radträger 2 vorliegt, genauer gesagt in radialer Richtung nach innen von dem Außenring 7 und in radialer Richtung nach außen von dem Radträger 2 begrenzt ist. In dem hier dargestellten Ausführungsbeispiel ist der Labyrinthspalt 23 von einer in dem Außenring 7 hergestellten Aussparung gebildet.

Gezeigt ist ebenfalls, dass das Vordichtungselement 15 einen Encoder beziehungsweise Impulsgeber 24 trägt, der beispielsweise zur Drehzahlmessung herangezogen wird. Der Impulsgeber 24 weist ein Befestigungsmaterial auf, welches von einem Material des Vordichtungselements 15 verschieden ist, zum Beispiel wird als Befestigungsmaterial Gummi verwendet, welches insbesondere auf das Vordichtungselement 15 aufvulkanisiert ist. Mittels dieses Befestigungsmaterials sind Impulsgeberelemente an dem Vordichtungselement 15 befestigt. Die Impulsgeberelemente sind beispielsweise in das Befestigungsmaterial eingebettet und in Umfangsrichtung verteilt, insbesondere gleichmäßig verteilt, angeordnet. Sie bestehen bevorzugt aus einem magnetischen oder magnetisierbaren Material.

Es kann vorgesehen sein, dass der Impulsgeber 24 ebenfalls in dem Labyrinthspalt 23 angeordnet ist. Alternativ ist er außerhalb angeordnet. Dargestellt sind beide Varianten; es ist jedoch üblicherweise nur einer der beiden dargestellten Impulsgeber 24 vorhanden. Beispielsweise ist der Impulsgeber 24 an einem Dichtungsvorsprung 25 des Vordichtungselements 15 angeordnet, welcher sich in den Labyrinthspalt 23 hinein erstreckt.

Die Figur 2 zeigt eine schematische Längsschnittdarstellung der Radträgeranordnung 1 in einer zweiten Ausführungsform. Diese entspricht im Wesentlichen der ersten Ausführungsform, sodass auf die entsprechenden Ausführungen vollumfänglich Bezug genommen und nachfolgend lediglich auf die Unterschiede eingegangen wird. Diese liegen darin, dass die beiden Dichtungsteile 16 und 17 einstückig und materialeinheitlich miteinander ausgestaltet sind. Das Vordichtungselement 15 liegt insoweit beispielsweise als Blechbiegeteil vor.

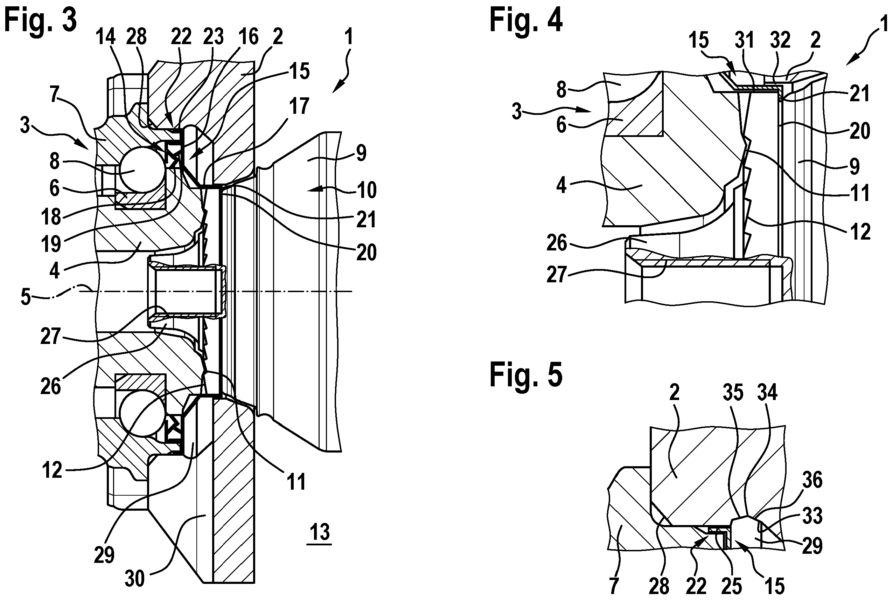

Die Figur 3 zeigt eine weitere schematische Darstellung der Radträgeranordnung 1 in einer ersten Ansicht. Es ist nun erkennbar, dass das Drehmomentübertragungselement 9 einen Axialvorsprung 26 aufweist. In diesem ist beispielsweise ein Innengewinde 27 ausgestaltet, in welches eine Schraube zum Verspannen von Drehmomentübertragungselement 9 und Radnabe 4 gegeneinander einschraubbar ist. Ebenfalls ist erkennbar, dass der Radträger 2 auf seiner in axialer Richtung dem Radlager 3 zugewandten Seite eine Einführschräge 28 aufweist, um ein Einpressen des Radlagers 3 in den Radträger 2 zu vereinfachen. Ebenfalls ist zu erkennen, dass das Vordichtungselement 15 gemeinsam mit dem Radträger 2 einen Vordichtungsraum 29 begrenzt. In diesem mündet an einer geodätisch unten liegenden Seite eine Wasserablaufbohrung 30 ein.

Die Figur 4 zeigt eine schematische Detaildarstellung der Radträgeranordnung 1 in einer zweiten Ansicht. Erkennbar ist vor allem, dass zwischen dem Vordichtungselement 15 und dem Drehmomentübertragungselement 9 ein Radialspalt 31 vorliegt, der zumindest die gleichen Abmessungen aufweist wie ein Spalt 32, der zwischen dem Vordichtungselement 9 und dem Radträger 2 vorliegt.

Die Figur 5 zeigt eine weitere schematische Detaildarstellung der Radträgeranordnung 1, nämlich im Bereich des Dichtungslabyrinths 22. Der von dem Vordichtungselement 15 begrenzte Vordichtungsraum 29 ist in radialer Richtung nach außen von einer Wand 33 begrenzt, die von dem Radträger 2 gebildet ist. Diese Wand weist eine Kante 34 auf, in welcher zwei Teilwände 35 und 36 unter einem Winkel aufeinandertreffen, welcher größer als 0° und kleiner als 180° ist. Beispielsweise ist der Winkel ein stumpfer Winkel, es kann jedoch auch ein spitzer Winkel vorliegen. Mithilfe der Kante 34 wird Flüssigkeit zuverlässig in Richtung der Wasserablaufbohrung 30 abgeführt und ein Strömen in Richtung des Radlagers verhindert.

### BEZUGSZEICHENLISTE:

- 1: Radträgeranordnung
- 2: Radträger
- 3: Radlager
- 4: Radnabe
- 5: Radnabendrehachse
- 6: Innenring
- 7: Außenring
- 8: Wälzkörper
- 9: Drehmomentübertragungselement
- 10: Gelenk
- 11: 1. Verzahnung
- 12: 2. Verzahnung
- 13: Außenumgebung
- 14: Dichtung
- 15: Vordichtungselement
- 16: 1. Dichtungsteil
- 17: 2. Dichtungsteil
- 18: Dichtlippe
- 19: Dichtlippe
- 20: Dichtspalt
- 21: Ende
- 22: Dichtungslabyrinth
- 23: Labyrinthspalt
- 24: Impulsgeber
- 25: Dichtungsvorsprung
- 26: Axialvorsprung
- 27: Innengewinde
- 28: Einführschräge
- 29: Vordichtungsraum
- 30: Wasserablaufbohrung
- 31: Radialspalt
- 32: Spalt
- 33: Wand
- 34: Kante
- 35: Teilwand
- 36: Teilwand

## Patentansprüche

1. Radträgeranordnung (1) für ein Kraftfahrzeug, mit einem Radträger (2) und einem Radlager (3) zur Drehlagerung einer Radnabe (4) an dem Radträger (2) um eine Radnabendrehachse (5), wobei die Radnabe (4) eine erste Verzahnung (11) aufweist, die mit einer zweiten Verzahnung (12) eines Drehmomentübertragungselements (9) in Eingriff steht, wobei zwischen einem Innenring (6) und einem Außenring (7) des Radlagers (3) eine mit einem Vordichtungselement (15) dichtend zusammenwirkende Dichtung (14) angeordnet ist und das Vordichtungselement (15) formschlüssig mit dem Drehmomentübertragungselement (9) zusammenwirkt, um dieses in axialer Richtung bezüglich der Radnabendrehachse (5) relativ zu dem Radlager (3) festzusetzen, **dadurch gekennzeichnet, dass** das Vordichtungselement (15) den Außenring (7) des Radlagers (3) zur Ausbildung eines Dichtungslabyrinths (22) umgreift.

2. Radträgeranordnung nach Anspruch 1, **dadurch gekennzeichnet, dass** das Drehmomentübertragungselement (9) ein Gelenkelement eines winkelbeweglichen Gelenks (10) ist, über welches der Radträger (2) antriebstechnisch mit einer Welle gekoppelt ist.

3. Radträgeranordnung nach einem der vorhergehenden Ansprüche, **dadurch gekennzeichnet, dass** das Vordichtungselement (15) ein erstes Dichtungsteil (16) und ein zweites Dichtungsteil (17) aufweist, wobei das erste Dichtungsteil (16) an dem Innenring (6) des Radlagers (3) anliegt und sich bis auf die dem Innenring (6) abgewandte Seite des Außenrings (7) erstreckt und das zweite Dichtungsteil (17) von dem ersten Dichtungsteil (16) ausgeht und mit dem Drehmomentübertragungselement (9) formschlüssig zusammenwirkt.

4. Radträgeranordnung nach einem der vorhergehenden Ansprüche, **dadurch gekennzeichnet, dass** das erste Dichtungsteil (16) aus einem ersten Material und das zweite Dichtungsteil (17) aus einem zweiten Material besteht, wobei das erste Material und das zweite Material identisch oder voneinander verschieden sind.

5. Radträgeranordnung nach einem der vorhergehenden Ansprüche, **dadurch gekennzeichnet, dass** das erste Dichtungsteil (16) mit dem zweiten Dichtungsteil (17) stoffschlüssig verbunden ist, oder dass das erste Dichtungsteil (16) und das zweite Dichtungsteil (17) einstückig und materialeinheitlich ausgestaltet sind.

6. Radträgeranordnung nach einem der vorhergehenden Ansprüche, **dadurch gekennzeichnet, dass** das zweite Dichtungsteil (17) elastisch ist, sodass ein dem Drehmomentübertragungselement (9) zugewandtes Ende (21) des zweiten Dichtungsteils (17) relativ zu dem ersten Dichtungsteil (16) elastisch auslenkbar ist.

7. Radträgeranordnung nach einem der vorhergehenden Ansprüche, **dadurch gekennzeichnet, dass** zwischen dem Außenring (7) und dem Radträger (2) ein Labyrinthspalt (23) zur Aufnahme des Vordichtungselements (15) vorliegt.

8. Radträgeranordnung nach einem der vorhergehenden Ansprüche, **dadurch gekennzeichnet, dass** der Radträger (2) eine Ausnehmung aufweist, in welcher das Radlager (3) die Radnabe (4) sowie das Drehmomentübertragungselement (9) jeweils zumindest bereichsweise angeordnet sind und in radialer Richtung bezüglich der Radnabendrehachse (5) vorliegende Innenabmessungen der Ausnehmung aus Richtung des Radlagers (3) in Richtung des Drehmomentübertragungselements (9) abnehmen.

9. Radträgeranordnung nach einem der vorhergehenden Ansprüche, **dadurch gekennzeichnet, dass** zum formschlüssigen Zusammenwirken des Vordichtungselements (15) mit dem Drehmomentübertragungselement (9) das Drehmomentübertragungselement (9) einen Dichtspalt (20) aufweist, in welchen das Vordichtungselement (15) dichtend eingreift.

10. Radträgeranordnung nach einem der vorhergehenden Ansprüche, **dadurch gekennzeichnet, dass** die Ausnehmung auf einer in axialer Richtung dem Radlager (3) zugewandten Seite und/oder dem Drehmomentübertragungselement (9) abgewandten Seite mit einer Einführschräge (28) ausgestaltet ist.

11. Radträgeranordnung nach einem der vorhergehenden Ansprüche, **dadurch gekennzeichnet, dass** das Vordichtungselement (15) zusammen mit dem Radträger (2) einen Vordichtungsraum (29) begrenzt, in welchen eine Wasserablaufbohrung (30) einmündet.

12. Verfahren zum Herstellen einer Radträgeranordnung (1) für ein Kraftfahrzeug, insbesondere einer Radträgeranordnung (1) nach einem oder mehreren der vorhergehenden Ansprüche, wobei die Radträgeranordnung (1) über einen Radträger (2) und ein Radlager (3) zur Drehlagerung einer Radnabe (4) an dem Radträger (2) um eine Radnabendrehachse (5) verfügt, wobei die Radnabe (4) eine erste Verzahnung (11) aufweist, die mit einer zweiten Verzahnung (12) eines Drehmomentübertragungselements (9) in Eingriff gebracht wird, wobei zwischen einem Innenring (6) und einem Außenring (7) des Radlagers (3) eine mit einem Vordichtungselement (15) dichtend zusammenwirkende Dichtung (14) angeordnet ist und das Vordichtungselement (15) formschlüssig mit dem Drehmomentübertragungselement (9) in Eingriff gebracht wird, um dieses in axialer Richtung bezüglich der Radnabendrehachse (5) relativ zu dem Radlager (3) festzusetzen, **dadurch gekennzeichnet, dass** das Vordichtungselement (15) den Außenring (7) des Radlagers (3) zur Ausbildung eines Dichtungslabyrinths (22) umgreifend angeordnet wird.

## Claims

1. A wheel carrier arrangement (1) for a motor vehicle, comprising a wheel carrier (2) and a wheel bearing (3) for the rotary mounting of a wheel hub (4) on the wheel carrier (2) about a wheel hub axis of rotation (5), wherein the wheel hub (4) has a first gear (11) which engages with a second gear (12) of a torque transmission element (9), wherein a sealing (14) which interacts sealingly with a pre-sealing element (15) is arranged between an inner ring (6) and an outer ring (7) of the wheel bearing (3), and the pre-sealing element (15) form-fittingly interacts with the torque transmission element (9) in order to fix it in the axial direction with respect to the wheel hub axis of rotation (5) relative to the wheel bearing (3), **characterised in that** the pre-sealing element (15) surrounds the outer ring (7) of the wheel bearing (3) to form a sealing labyrinth (22).

2. The wheel carrier arrangement according to claim 1, **characterised in that** the torque transmission element (9) is a joint element of an angularly movable joint (10), via which the wheel carrier (2) is drivingly coupled to a shaft.

3. The wheel carrier arrangement according to any one of the preceding claims, **characterised in that** the pre-sealing element (15) has a first sealing part (16) and a second sealing part (17), wherein the first sealing part (16) rests on the inner ring (6) of the wheel bearing (3) and extends to the side of the outer ring (7) facing away from the inner ring (6), and the second sealing part (17) extends from the first sealing part (16) and interacts with the torque transmission element (9) in a form-fitting manner.

4. The wheel carrier arrangement according to any one of the preceding claims, **characterised in that** the first sealing part (16) consists of a first material and the second sealing part (17) consists of a second material, wherein the first material and the second material are identical or different from one another.

5. The wheel carrier arrangement according to any one of the preceding claims, **characterised in that** the first sealing part (16) is materially connected to the second sealing part (17), or **in that** the first sealing part (16) and the second sealing part (17) are designed in one piece and from the same material.

6. The wheel carrier arrangement according to any one of the preceding claims, **characterised in that** the second sealing part (17) is elastic, so that an end (21) of the second sealing part (17) facing the torque transmission element (9) can be elastically deflected relative to the first sealing part (16).

7. The wheel carrier arrangement according to any one of the preceding claims, **characterised in that** a labyrinth gap (23) for receiving the pre-sealing element (15) is present between the outer ring (7) and the wheel carrier (2).

8. The wheel carrier arrangement according to any one of the preceding claims, **characterised in that** the wheel carrier (2) has a recess in which the wheel bearing (3), the wheel hub (4) and the torque transmission element (9) are each arranged at least in regions, and internal dimensions of the recess present in the radial direction with respect to the wheel hub axis of rotation (5) decrease from the direction of the wheel bearing (3) in the direction of the torque transmission element (9).

9. The wheel carrier arrangement according to any one of the preceding claims, **characterised in that,** for form-fitting interaction of the pre-sealing element (15) with the torque transmission element (9), the torque transmission element (9) has a sealing gap (20) in which the pre-sealing element (15) engages in a sealing manner.

10. The wheel carrier arrangement according to any one of the preceding claims, **characterised in that** the recess is designed with an insertion bevel (28) on a side facing the wheel bearing (3) in the axial direction and/or on a side facing away from the torque transmission element (9).

11. The wheel carrier arrangement according to any one of the preceding claims, **characterised in that** the pre-sealing element (15) together with the wheel carrier (2) delimits a pre-sealing space (29) into which a water drainage bore (30) opens.

12. A method for producing a wheel carrier arrangement (1) for a motor vehicle, in particular a wheel carrier arrangement (1) according to one or more of the preceding claims, wherein the wheel carrier arrangement (1) has a wheel carrier (2) and a wheel bearing (3) for the rotary mounting of a wheel hub (4) on the wheel carrier (2) about a wheel hub axis of rotation (5), wherein the wheel hub (4) has a first gear (11) which is brought into engagement with a second gear (12) of a torque transmission element (9), wherein a sealing (14) which interacts sealingly with a pre-sealing element (15) is arranged between an inner ring (6) and an outer ring (7) of the wheel bearing (3), and the pre-sealing element (15) is brought into form-fitting engagement with the torque transmission element (9) in order to fix it in the axial direction with respect to the wheel hub axis of rotation (5) relative to the wheel bearing (3), **characterised in that** the pre-sealing element (15) is arranged so as to surround the outer ring (7) of the wheel bearing (3) to form a sealing labyrinth (22).

## Revendications

1. Agencement de support de roue (1) pour un véhicule automobile, avec un support de roue (2) et un palier de roue (3) pour supporter en rotation un moyeu de roue (4) sur le support de roue (2) autour d'un axe de rotation de moyeu de roue (5), dans lequel le moyeu de roue (4) présente une première denture (11) qui est en prise avec une seconde denture (12) d'un élément de transmission de couple (9), dans lequel un joint d'étanchéité (14) coopérant de manière étanche avec un élément de pré-étanchéité (15) est disposé entre une bague intérieure (6) et une bague extérieure (7) du palier de roue (3), et l'élément de pré-étanchéité (15) coopère par complémentarité de formes avec l'élément de transmission de couple (9) pour bloquer celui-ci dans la direction axiale par rapport à l'axe de rotation de moyeu de roue (5) et par rapport au palier de roue (3), **caractérisé en ce que** l'élément de pré-étanchéité (15) entoure la bague extérieure (7) du palier de roue (3) pour former un labyrinthe d'étanchéité (22).

2. Agencement de support de roue selon la revendication 1, **caractérisé en ce que** l'élément de transmission de couple (9) est un élément d'articulation d'une articulation à mouvement angulaire (10) par l'intermédiaire de laquelle le support de roue (2) est couplé en entraînement à un arbre.

3. Agencement de support de roue selon l'une quelconque des revendications précédentes, **caractérisé en ce que** l'élément de pré-étanchéité (15) présente une première pièce d'étanchéité (16) et une seconde pièce d'étanchéité (17), dans lequel la première pièce d'étanchéité (16) repose contre la bague intérieure (6) du palier de roue (3) et s'étend jusqu'au côté de la bague extérieure (7) opposé à la bague intérieure (6), et la seconde pièce d'étanchéité (17) émane de la première partie d'étanchéité (16) et coopère par complémentarité de formes avec l'élément de transmission de couple (9).

4. Agencement de support de roue selon l'une quelconque des revendications précédentes, **caractérisé en ce que** la première pièce d'étanchéité (16) est constituée d'un premier matériau et la seconde pièce d'étanchéité (17) d'un second matériau, dans lequel le premier matériau et le second matériau sont identiques ou différents l'un de l'autre.

5. Agencement de support de roue selon l'une quelconque des revendications précédentes, **caractérisé en ce que** la première pièce d'étanchéité (16) est reliée à la seconde pièce d'étanchéité (17) par accouplement de matière, ou **en ce que** la première pièce d'étanchéité (16) et la seconde pièce d'étanchéité (17) sont conçues d'un seul tenant et d'un seul matériau.

6. Agencement de support de roue selon l'une quelconque des revendications précédentes, **caractérisé en ce que** la seconde pièce d'étanchéité (17) est élastique, de sorte qu'une extrémité (21) de la seconde pièce d'étanchéité (17) tournée vers l'élément de transmission de couple (9) peut être déviée élastiquement par rapport à la première pièce d'étanchéité (16).

7. Agencement de support de roue selon l'une quelconque des revendications précédentes, **caractérisé en ce qu'**un interstice de labyrinthe (23) destiné à recevoir l'élément de pré-étanchéité (15) est présent entre la bague extérieure (7) et le support de roue (2).

8. Agencement de support de roue selon l'une quelconque des revendications précédentes, **caractérisé en ce que** le support de roue (2) présente un évidement dans lequel le palier de roue (3), le moyeu de roue (4) ainsi que l'élément de transmission de couple (9) sont disposés respectivement au moins par zones et des dimensions intérieures de l'évidement dans la direction radiale par rapport à l'axe de rotation de moyeu de roue (5) diminuent de la direction du palier de roue (3) vers la direction de l'élément de transmission de couple (9).

9. Agencement de support de roue selon l'une quelconque des revendications précédentes, **caractérisé en ce que,** pour la coopération par complémentarité de formes entre l'élément de pré-étanchéité (15) et l'élément de transmission de couple (9), l'élément de transmission de couple (9) présente un interstice d'étanchéité (20) dans lequel l'élément de pré-étanchéité (15) s'engage de manière étanche.

10. Agencement de support de roue selon l'une quelconque des revendications précédentes, **caractérisé en ce que** l'évidement est conçu avec une pente d'introduction (28) sur un côté tourné vers le palier de roue (3) dans la direction axiale et/ou sur le côté opposé à l'élément de transmission de couple (9).

11. Agencement de support de roue selon l'une quelconque des revendications précédentes, **caractérisé en ce que** l'élément de pré-étanchéité (15) délimite, conjointement avec le support de roue (2), une chambre de pré-étanchéité (29) dans laquelle débouche un alésage d'évacuation d'eau (30).

12. Procédé de fabrication d'un agencement de support de roue (1) pour un véhicule automobile, en particulier d'un agencement de support de roue (1) selon une ou plusieurs des revendications précédentes, dans lequel l'agencement de support de roue (1) présente dispose d'un support de roue (2) et d'un palier de roue (3) pour supporter en rotation un moyeu de roue (4) sur le support de roue (2) autour d'un axe de rotation de moyeu de roue (5), dans lequel le moyeu de roue (4) présente une première denture (11) qui est mise en prise avec une seconde denture (12) d'un élément de transmission de couple (9), dans lequel un joint d'étanchéité (14) coopérant de manière étanche avec un élément de pré-étanchéité (15) est disposé entre une bague intérieure (6) et une bague extérieure (7) du palier de roue (3), et l'élément de pré-étanchéité (15) est mis en prise par complémentarité de formes avec l'élément de transmission de couple (9) pour bloquer celui-ci dans la direction axiale par rapport à l'axe de rotation de moyeu de roue (5) et par rapport au palier de roue (3), **caractérisé en ce que** l'élément de pré-étanchéité (15) est disposé de manière à entourer la bague extérieure (7) du palier de roue (3) pour former un labyrinthe d'étanchéité (22).
